(19) Europäisches Patentamt / European Patent Office / Office européen des brevets

(11) **EP 3 725 827 A1**

(12) **EUROPÄISCHE PATENTANMELDUNG**

(43) Veröffentlichungstag:
**21.10.2020 Patentblatt 2020/43**

(51) Int Cl.:
*C08J 9/00* (2006.01)    *C08J 9/10* (2006.01)

(21) Anmeldenummer: **19169378.7**

(22) Anmeldetag: **16.04.2019**

| | |
|---|---|
| (84) Benannte Vertragsstaaten:<br>**AL AT BE BG CH CY CZ DE DK EE ES FI FR GB GR HR HU IE IS IT LI LT LU LV MC MK MT NL NO PL PT RO RS SE SI SK SM TR**<br>Benannte Erstreckungsstaaten:<br>**BA ME**<br>Benannte Validierungsstaaten:<br>**KH MA MD TN** | (71) Anmelder: **Henkel AG & Co. KGaA**<br>**40589 Düsseldorf (DE)**<br><br>(72) Erfinder:<br>• **Sauer, Ralf**<br>**68789 St. Leon-Rot (DE)**<br>• **Klotz, Michael**<br>**68353 Edingen-Neckarhausen (DE)**<br>• **Yamada, Takehito**<br>**69117 Heidelberg (DE)** |

(54) **PUMPBARE THERMISCH EXPANDIERBARE ZUBEREITUNG**

(57)    Die vorliegende Anmeldung betrifft eine bei Applikationstemperaturen, typischerweise im Bereich von 30 bis 120°C, pumpbare, thermisch härt- und expandierbare Zubereitung, enthaltend mindestens einen festen Kautschuk, mindestens einen flüssigen Kautschuk, mindestens ein thermisch aktivierbares Treibmittel und ein Härter-System enthaltend mindestens ein Peroxid und mindestens ein Chinon, Chinondioxim oder Dinitroso- benzol, ein Verfahren zum Versteifen von Bauteilen mit dünnwandigen Strukturen mit derartigen Zubereitungen oder zum Abdichten von Hohlräumen in Bauteilen unter Verwendung derartiger Zubereitungen sowie die Verwendung dieser Zubereitungen zur Versteifung von derartigen Strukturen bzw. zum Abdichten von Hohlräumen in Bauteilen.

EP 3 725 827 A1

**Beschreibung**

Die vorliegende Anmeldung betrifft eine bei Applikationstemperaturen, typischerweise im Bereich von 30 bis 120°C, pumpbare, thermisch härt- und expandierbare Zubereitung, die die hierin offenbarten Bestandteile enthält, ein Verfahren zum Versteifen von Bauteilen mit dünnwandigen Strukturen mit derartigen Zubereitungen oder zum Abdichten von Hohlräumen in Bauteilen unter Verwendung derartiger Zubereitungen sowie die Verwendung dieser Zubereitungen zur Versteifung von derartigen Strukturen bzw. zum Abdichten von Hohlräumen in Bauteilen.

Moderne Fahrzeuge und Fahrzeugteile weisen eine Vielzahl von Hohlräumen auf, die abgedichtet werden müssen, um den Eintritt von Feuchtigkeit und Verschmutzungen zu verhindern, da diese zur Korrosion an den entsprechenden Karosserieteilen von innen heraus führen kann. Dies trifft insbesondere auf moderne selbst tragende Karosseriekonstruktionen zu, bei denen eine schwere Rahmenkonstruktion durch leichtgewichtige, strukturfeste Rahmengerüste aus vorgefertigten Hohlraumprofilen ersetzt wird. Derartige Konstruktionen weisen systembedingt eine Reihe von Hohlräumen auf, die gegen das Eindringen von Feuchtigkeit und Verschmutzungen abgedichtet werden müssen. Derartige Abdichtungen dienen weiterhin dem Zweck, die Weiterleitung von Luftschall in derartigen Hohlräumen zu vermeiden und somit unangenehme Fahrzeuglauf- und Windgeräuschen zu mindern und somit den Fahrkomfort im Fahrzeug zu steigern.

Derartige Hohlräume enthaltende Rahmen- und Karosserieteile können beispielsweise aus halbschaligen Bauteilen vorgefertigt werden, die zu einem späteren Zeitpunkt durch Schweißen und/oder Kleben zu dem geschlossenen Hohlprofil gefügt werden. Bei derartiger Bauweise ist der Hohlraum im frühen Aufbauzustand einer Fahrzeugkarosserie folglich leicht zugänglich, so dass abdichtende und akustisch dämpfende Schottteile in dieser Phase des Rohbaus durch mechanisches Einhängen, durch Einstecken in entsprechende Haltevorrichtungen, Bohrungen oder durch Anschweißen fixiert werden können. Weiterhin können derartige Hohlprofile aus Stahl-, Aluminium- oder Kunststoffwerkstoffen im Strangpressverfahren, durch Hydroforming, durch Druckguss- oder durch Zieh-Verfahren hergestellt werden. Die resultierenden Hohlräume sind nur noch durch die Querschnittsöffnungen am Ende dieser Profile zugänglich.

Schottteile, die eine abdichtende und/oder akustische Wirkung in derartigen Hohlräumen bewirken, werden häufig als "pillar filler", "baffles" oder "acoustic baffles" bezeichnet. Sie bestehen in der Regel entweder vollständig aus thermisch expandierbaren Formkörpern oder aus Formkörpern, die einen Träger und in ihrem Peripheriebereich expandierbare polymere Zubereitungen enthalten. Diese Schottteile werden im Rohbau durch Einhängen, Einclipsen, Verschrauben oder Anschweißen an den offenen Baustrukturen befestigt. Nach dem Schließen der Baustrukturen im Rohbau und den weiteren Vorbehandlungen der Karosserie wird dann die Prozesswärme der Öfen zur Aushärtung der kathodischen Tauchlackierung ausgenutzt, um die Expansion des expandierbaren Teils des Schottteils auszulösen um somit den Querschnitt des Hohlraums abzudichten.

Des Weiteren werden für viele Anwendungsgebiete Leichtbauteile für eine konstant maßhaltige Serienfertigung mit hoher Steifigkeit und Strukturfestigkeit benötigt. Insbesondere im Fahrzeugbau besteht wegen der dort gewünschten Gewichtsersparnis ein hoher Bedarf an Leichtbauteilen aus dünnwandigen Strukturen, die trotzdem ausreichende Steifigkeit und Strukturfestigkeit besitzen. Ein Weg zur Erzielung hoher Steifigkeit und Strukturfestigkeit bei möglichst niedrigem Gewicht des Bauteils benutzt Hohlteile, die aus verhältnismäßig dünnem Blech oder Kunststoffplatten gefertigt sind. Dünnwandige Bleche neigen jedoch leicht zu Deformation. Daher ist es bereits seit einiger Zeit bekannt, bei Hohlkörperstrukturen diesen Hohlraum vollständig oder auch nur teilweise, beispielsweise in mechanisch besonders beanspruchten Teilbereichen, mit einem Strukturschaum auszuschäumen. Dadurch können einerseits Deformationen oder Verformungen minimiert oder sogar vollständig verhindert werden und andererseits Festigkeit und Steifigkeit der Hohlkörperstrukturen erhöht werden.

Üblicherweise sind derartige geschäumte Verstärkungs- und Versteifungsmittel entweder Metallschäume oder sie werden aus thermisch härt- und expandierbaren Zubereitungen, beispielsweise auf Basis von Epoxidharzen, hergestellt. Im letzteren Fall werden die Zubereitungen in der Regel in Form von thermisch härt- und expandierbare Formkörpern auf Basis von reaktiven Epoxidharzen, die mittels herkömmlicher Spritzgusstechniken hergestellt werden, bereitgestellt. Derartige Formkörper werden jeweils in ihrer räumlichen Gestaltung genau auf den gewünschten Anwendungszweck abgestimmt. Im Rahmen der Fertigung der Leichtbauteile werden die härt- und expandierbaren Formkörper dann vor Ort in die zu verstärkenden Bauteile eingeführt und in einem separaten Verfahrensschritt durch Erhitzung (beispielsweise im Rahmen des Lackierprozesses) ausgehärtet und aufgeschäumt. Allerdings müssen bei dieser Vorgehensweise für jedes zu verstärkende Bauteil aufwändig ein entsprechend ausgebildetes Formteil sowie die zu dessen Herstellung notwendigen Spritzgussformen entwickelt werden; ein flexibler Einsatz dieser Verstärkungsmittel ist folglich kaum möglich.

Weiterhin hat dieses Verfahren den Nachteil, dass die bei Raumtemperatur festen Zubereitung zur Herstellung der Formkörper erhitzt werden müssen, was unter Umständen dazu führen kann, dass der irreversible, stark exotherme Härtungsprozess bereits initiiert wird. Teilweise wird eine geringfügige Aushärtung der Systeme sogar bewusst in Kauf genommen, um die Formstabilität und Oberflächenbeschaffenheit der Formkörper zu optimieren.

Alternativ wurden beispielsweise in der WO-A2-2002/31077 Zweikomponentensysteme zur Versteifung von Bauteilen vorgeschlagen, die bereits bei Raumtemperatur härten. Allerdings bergen derartige Systeme erhöhte Risiken hinsichtlich der Dosiergenauigkeit, was sowohl die Expansionsrate als auch die resultierenden mechanischen Eigenschaften negativ beeinflusst. Außerdem ergeben sich bei derartigen bei Raumtemperatur härtenden Systemen Strukturschäume, die hinsichtlich ihrer thermomechanischen Eigenschaften den heiß-gehärteten Systemen unterlegen sind.

Als dritte Alternative können pastenförmige Strukturklebstoffe zum Einsatz kommen. Diese haben allerdings den Nachteil einer zu geringen Standfestigkeit, insbesondere wenn sie in größeren Schichtdicken appliziert werden. Außerdem neigen derartige pastenförmige Strukturklebstoffe dazu, während des Aufheizvorgangs aus dem gezielten Anwendungsbereich heraus zu fließen und so an der gewünschten Stelle nicht die volle Wirksamkeit zu entfalten. Ein weiterer Nachteil ist die geringe Resistenz gegenüber dem Abwaschen in bestimmten Anwendungen sowie eine nicht ausreichende Expansion, um die Hohlräume auszufüllen.

Zudem ist es in der heutigen Zeit der Automatisierung der Herstellprozesse durch den Einsatz von Robotern wünschenswert, wenn die Komponenten zur lokalen Verstärkung und Abdichtung von (Hohl-)Bauteilen direkt durch einen Roboter appliziert werden könnten. Dies spart Zeit und Kosten und kann zudem kann durch eine Umprogrammierung des Roboters der Herstellungsprozess schnell an andere Bauteile und Geometrien angepasst werden. Hierzu ist es aber vor allem wünschenswert, wenn sich der zur Verstärkung und Abdichten geeignete Stoff direkt vom Roboter aufgetragen werden kann.

Dementsprechend war es die Aufgabe der vorliegenden Erfindung, Zubereitungen zur Herstellung von Strukturschäumen für die lokale Verstärkung und Abdichtung von (Hohl-)Bauteilen zur Verfügung zu stellen, die die oben genannten Nachteile überwinden.

Überraschenderweise wurde nunmehr gefunden, dass thermisch expandierbare Zubereitungen, die die hierin beschriebene Kombination von Komponenten enthalten, ein derartiges Verhalten zeigen, dass einerseits eine gute Applizierbarkeit mittels herkömmlicher Pumpen gewährleistet ist, wodurch eine automatische Applizierung mittels eines Roboters ermöglicht wird, und andererseits die aufgetragene Zubereitung bereits vor der Aushärtung eine ausreichende Standfestigkeit und Haftung aufweist, so dass ein Abrutschen der Zubereitung aus dem Auftragsgebiet vor der Aushärtung beziehungsweise während des Aufheizvorgangs verhindert wird. Zusätzlichen weisen die erfindungsgemäßen Zubereitungen neben der hervorragenden Anfangshaftung ebenfalls eine sehr gute Haftung von der expandierten Zubereitung auf. Durch diese Haftung nach der Expansion wird neben dem guten Anhaften des Schaumes vor allem eine gute und dauerhafte Abdichtung gewährleistet. Darüber hinaus zeichnen sich die ausgehärteten Zubereitungen durch sehr hohe Expansionsraten von 250% und mehr sowie mechanische Eigenschaften aus, die denen herkömmlicher Versteifungsschäume auf Basis von festen Formkörpern entsprechen.

Ein Gegenstand der vorliegenden Erfindung sind daher bei Applikationstemperaturen im Bereich von 30 bis 120°C pumpbare, thermisch expandierbare Zubereitungen, enthaltend

(a) mindestens einen festen Kautschuk;
(b) mindestens einen flüssigen Kautschuk;
(c) mindestens ein thermisch aktivierbares Treibmittel; und
(d) ein Härter-System enthaltend

- mindestens ein Peroxid und
- mindestens ein Chinon, Chinondioxim oder Dinitrosobenzol;

"Mindestens ein", wie hierin verwendet, bedeutet 1 oder mehr, d.h. 1, 2, 3, 4, 5, 6, 7, 8, 9 oder mehr. Bezogen auf einen Inhaltsstoff bezieht sich die Angabe auf die Art des Inhaltsstoffs und nicht auf die absolute Zahl der Moleküle. "Mindestens ein Polymer" bedeutet somit beispielsweise mindestens eine Art von Polymer, d.h. dass eine Art von Polymer oder eine Mischung mehrerer verschiedener Polymere gemeint sein kann. Zusammen mit Gewichtsangaben bezieht sich die Angabe auf alle Verbindungen der angegebenen Art, die in der Zusammensetzung/Mischung enthalten sind, d.h. dass die Zusammensetzung über die angegebene Menge der entsprechenden Verbindungen hinaus keine weiteren Verbindungen dieser Art enthält.

"Fest" ist ein Stoff dann, wenn er bei 20°C und 1013 mbar im festen Aggregatzustand vorliegt. In einem festen Aggregatzustand liegt der Stoff vor, wenn sich die Geometrie des Stoffes bei den angegebenen Bedingungen innerhalb von 1 Stunde, insbesondere innerhalb von 24 Stunden, nicht unter dem Einfluss der Schwerkraft verformt. "Flüssig" bedeutet im Rahmen der Erfindung, dass die entsprechende Verbindung/Komponente, bei Standardbedingungen, d.h. 20 °C und 1013 mbar, nicht in fester Form vorliegt. Somit sind auch pastöse Stoffe im Rahmen dieser Erfindung flüssig. Bevorzugt ist ein flüssiger Stoff bei Standardbedingungen fließfähig und kann damit beispielsweise aus einem Behälter ausgeschüttet werden. Vorzugsweise hat ein flüssiger Stoff eine Viskosität von bis 250 Pa*s bei 20°C. Soweit nicht anders vermerkt werden die Viskositäten im Rahmen der vorliegenden Anmeldung unter den folgenden Messbedingungen bestimmt: Rotationsrheometer mit Platte-Platte-Geometrie (PP20), gemessen in Oszillation bei 10% Deformation und einer Frequenz von 100 rad/s, Schichtdicke des Materials 0,2mm.

Alle Prozentangaben, die im Zusammenhang mit den hierin beschriebenen Zubereitungen gemacht werden, beziehen sich, sofern nicht explizit anders angegeben auf Gew.-%, jeweils bezogen auf die betreffende Zubereitung oder Zusammensetzung.

Zahlenwerte, die hierin ohne Dezimalstellen angegeben sind, beziehen sich jeweils auf den vollen angegebenen Wert mit einer Dezimalstelle. So steht beispielsweise "99%" für "99,0%". Zahlenwerte, die hierin ohne Dezimalstellen angegeben sind, beziehen sich jeweils auf den vollen angegebenen Wert mit einer Dezimalstelle.

Der Ausdrücke "ungefähr" oder "etwa", in Zusammenhang mit einem Zahlenwert, bezieht sich auf eine Varianz von $\pm 10\%$ bezogen auf den angegebenen Zahlenwert.

Die im vorliegenden Text angegebenen Molekulargewichte beziehen sich, soweit nicht anders angegeben, auf das Gewichtsmittel des Molekulargewichts (Mw). Das Molekulargewicht Mw kann durch Gelpermeationschromatographie (GPC) gemäß DIN 55672-1:2007-08 mit Polystyrol als Standard und THF als Eluent bestimmt werden. Falls nicht anders angegeben, sind die aufgeführten Molekulargewichte solche, die mittels GPC bestimmt wurden. Das Zahlenmittel des Molekulargewichts Mn kann ebenfalls mittels GPC, wie oben angegeben, bestimmt werden. Alternativ kann Mn auch auf Basis einer Endgruppenanalyse (Hydroxylzahl gemäß DIN 53240-1:2013-06) bestimmt werden, wenn das Polymer dies zulässt.

Unter "bei Applikationstemperaturen pumpbaren Zubereitungen" werden erfindungsgemäß Zubereitungen verstanden, die bei Temperaturen im Bereich von 30 bis 120°C, bevorzugt 30 bis 80°C mit herkömmlichen Pumpen mit einem Druck von weniger als 200bar, insbesondere von 6 bis 180bar, aus einem Vorratsgefäß auf den Ort der Anwendung appliziert werden können. Zubereitungen, die bei Applikationstemperaturen im Bereich von 40 bis 60°C mit herkömmlichen Pumpen mit einem Druck von weniger als 200bar, insbesondere von 6 bis 180bar, aus einem Vorratsgefäß auf den Ort der Anwendung appliziert werden können, sind besonders bevorzugt.

Ganz besonders bevorzugt sind erfindungsgemäß Zubereitungen, die "bei Applikationstemperaturen pumpbar" in dem Sinne sind, dass sie bei 60°C und einem Pumpendruck von 6bar einen Fluss von mindestens 100g/min, vorzugsweise von 150g/min bis 4500g/min, ganz bevorzugt von 250g/min bis 3000g/min aufweisen, wenn sie aus einer vollständig gefüllten, handelsüblichen Aluminiumdüsenkartusche mit einem Fassungsvolumen von 310ml und einem Innendurchmesser von 46mm, deren Austrittsöffnung mit Hilfe eines Kartuschenanstechers mit einem Außendurchmesser von 9mm geöffnet wurde, ohne Aufsatz einer Düse bei einer Temperatur von 60°C (nach 45Minuten Vortemperierung) und einem Druck von 6bar ausgebracht werden. Der Fluss gibt die Masse an Zubereitung an, die innerhalb von 1 Minute ausgebracht werden kann und wird dementsprechend in g/min angegeben.

Als die ersten beiden Komponenten enthält die erfindungsgemäße Zubereitung mindestens einen festen Kautschuk und mindestens einen flüssigen Kautschuk. Hierfür sind natürliche und/oder synthetische Kautschuke geeignet. Beispiele für geeignete Kautschuke sind Polybutadien, vorzugsweise mit einem sehr hohen Anteil an cis-1,4-Doppelbindungen (typischerweise über 95%), Styrol-Butadien-Kautschuk, wie Styrol-Butadien-Styrol Copolymere (SBS) oder Styrol-Butadien-Terpolymere (wie z.B. Styrol-Isopren-Butadien-Polymere), Butadien-Acrylnitril-Kautschuk, Styrol-Isopren-Kautschuke, wie Styrol-Isopren-Styrol Copolymere (SIS) oder Styrol-Isopren-Terpolymere, Styrol-Ethylen/Propylen-Styrol Copolymere (SEPS), Styrol-Ethylen/Ethylen/Propylen-Styrol Copolymere (SEEPS), synthetischer oder natürlicher Isoprenkautschuk, Polycyclooctenamer, Butylkautschuk oder Polyurethankautschuk.

In einer Ausführungsform ist der mindestens eine feste Kautschuk ausgewählt aus Styrol-Butadien-Kautschuken und Styrol-Isopren-Kautschuken, insbesondere aus Styrol-Butadien-Polymeren und Styrol-Isopren-Blockcopolymeren, besonders bevorzugt aus Styrol-Butadien-Polymeren. Der mindestens eine feste Kautschuk weist insbesondere ein gewichtsmittleres Molekulargewicht von größer 100000 g/mol auf. Bevorzugt ist der mindestens eine feste Kautschuk in einer Menge von 1 bis 30 Gew.-%, bevorzugt von 5 bis 25 Gew.-%, besonders bevorzugt von 8 bis 20 Gew.-% enthalten, jeweils bezogen auf das Gesamtgewicht der Zubereitung.

In einer weiteren Ausführungsform ist der mindestens eine flüssige Kautschuk ausgewählt aus Butadien-Isopren-Kautschuken und Styrol-Butadien-Kautschuken, insbesondere Butadien-Isopren-Kautschuken. Der mindestens eine flüssige Kautschuk weist insbesondere ein gewichtsmittleres Molekulargewicht von kleiner 100000 g/mol, insbesondere kleiner 70000 g/mol auf. Vorzugsweise ist das gewichtsmittlere Molekulargewicht des flüssigen Kautschuks im Bereich von 2000 bis 100000 g/mol, insbesondere von 5000 bis 70000 g/mol, bevorzugt von 10000 bis 50000 g/mol. Bevorzugt ist der mindestens eine flüssige Kautschuk in einer Menge von 1 bis 30 Gew.-%, bevorzugt von 5 bis 25 Gew.-%, besonders bevorzugt von 8 bis 20 Gew.-% enthalten, jeweils bezogen auf das Gesamtgewicht der Zubereitung.

Als weitere erfindungswesentliche Komponente enthalten die erfindungsgemäßen thermisch expandierbaren Zubereitungen ein thermisch aktivierbares Treibmittel. Als thermisch aktivierbare Treibmittel eignen sich im Prinzip alle bekannten Treibmittel wie beispielsweise "chemische Treibmittel", die bei thermischer Behandlung durch Zersetzung Gase freisetzen, oder "physikalische Treibmittel", dass heißt insbesondere thermisch expandierbare Hohlkugeln. Erfindungsgemäß bevorzugt sind chemische Treibmittel.

Unter einem chemischen Treibmittel werden erfindungsgemäß Verbindungen verstanden, die sich bei Einwirkung von Wärme zersetzen und dabei Gase freisetzen.

Beispiele für geeignete chemische Treibmittel sind Azoverbindungen, Hydrazidverbindungen, Nitrosoverbindungen und Carbazidverbindungen, wie beispielsweise Azobisisobutyronitril, Azodicarbonamid (ADCA), Di-nitroso-pentamethylentetramin (DNPT), 4,4'-Oxybis(benzolsulfonsäure hydrazid) (OBSH), 4-Methylbenzolsulfonsäurehydrazid, Azocyclohexylnitril, Azodiaminobenzol, Benzol-1,3-sulfonylhydrazid, Benzol-4-sulfonohydrazid (BSH), Calciumazid, 4,4'-Diphenyldisulfonylazid, Diphenyl-sulfon-3,3'-disulfohydrazid, Diphenyloxid-4,4'-disulfohydrazid, Benzol-1,3-disulfohydrazid, Trihydrazinotriazin, 5-Phenyltetrazol (5-PT), p-Toluolsulfonylhydrazid (TSH) und p-Toluolsulfonylsemicarbazid (PTSS).

Eine weitere Klasse geeigneter Treibmittel sind die H-Silane, die beispielsweise unter der Handelsbezeichnung Foaming Agent DY-5054 von Huntsmann vertrieben werden.

Weiterhin sind die in der DE-A1-102009029030 beschriebenen Carbamate als chemische, thermisch aktivierbare Treibmittel im Sinne der vorliegenden Erfindung besonders geeignet.

Ebenfalls geeignet sind endotherme chemische Treibmittel, insbesondere ausgewählt aus Bicarbonaten, festen, optional funktionalisierten, Polycarbonsäuren und deren Salzen und Mischungen daraus. Diese endothermen Treibmittel haben den Vorteil, dass sie weder gesundheitsschädlich noch explosiv sind und bei der Expansion geringerer Mengen an flüchtigen organischen Verbindungen (VOC) entstehen. Die Zersetzungsprodukte sind im wesentlichen $CO_2$ und Wasser. Ferner haben die damit hergestellten Produkte eine gleichmäßigere Schaumstruktur über den gesamten Prozesstemperaturbereich, der für die Härtung genutzt wird. Dadurch kann sich auch eine geringere Wasserabsorption ergeben. Schließlich ist die Zersetzungstemperatur der endothermen Treibmittel, insbesondere von Mischungen davon, im Vergleich zu konventionellen exothermen Triebmitteln geringer und daher können Prozesstemperatur verringert und Energie gespart werden.

Geeignete Bicarbonate (Hydrogencarbonate) sind solche der Formel $XHCO_3$, wobei X ein beliebiges Kation sein kann, insbesondere ein Alkalimetallion, vorzugsweise $Na^+$ oder $K^+$, wobei $Na^+$ äußerst bevorzugt ist. Weitere geeignete Kationen $X^+$ können ausgewählt sein aus $NH_4^+$, $\frac{1}{2}$ $Zn^{2+}$, $\frac{1}{2}$ $Mg^{2+}$, $\frac{1}{2}$ $Ca^{2+}$ und deren Mischungen.

Geeignete Polycarbonsäuren schließen ein, ohne darauf beschränkt zu sein, feste, organische Di-, Tri- oder Tetrasäuren, insbesondere Hydroxy-funktionalisierte oder ungesättigte Di-, Tri-, Tetra- oder Polycarbonsäuren, wie beispielsweise Citronensäure, Weinsäure, Äpfelsäure, Fumarsäure und Maleinsäure. Besonders bevorzugt ist die Verwendung von Citronensäure. Citronensäure ist unter anderem deshalb vorteilhaft, da es ein ökologisch nachhaltiges Treibmittel darstellt.

Ebenfalls geeignet sind die Salze der genannten Säuren sowie Mischungen von zwei oder mehr der beschriebenen Verbindungen. Bei Salzen der Polycarbonsäuren wird das Gegenion bevorzugt ausgewählt aus $Na^+$, $K^+$, $NH_4^+$, $\frac{1}{2}$ $Zn^{2+}$, $\frac{1}{2}$ $Mg^{2+}$, $\frac{1}{2}$ $Ca^{2+}$ und deren Mischungen wobei $Na^+$ und $K^+$, insbesondere $Na^+$ bevorzugt ist. Insbesondere die Salze der Polycarbonsäuren zeigen zu höheren Temperaturen hin verschobene Zersetzungstemperaturen, so dass ein breiteres Temperaturintervall der Zersetzung durch Abmischungen eingestellt werden kann.

Bei dem Einsatz von Polycarbonsäuren können vorzugsweise auch zusätzlich Carbonate eingesetzt. Bevorzugt ist dabei eine Mischung aus Hydrogencarbonaten und Carbonaten sowie Polycarbonsäuren, wodurch gezielt unterschiedliche Aktivierungsstufen und Zersetzungsreaktionen eingestellt werden können.

Besonders bevorzugte Treibmittel sind Natriumbicarbonat und/oder Zitronensäure/Citrate, ganz besonders bevorzugt ist das Treibmittel eine Mischung von Natriumbicarbonat und Zitronensäure/Citrat. Eine derartige Mischung hat im Vergleich zu konventionellen exothermen Treibmitteln wie ADCA oder OBSH eine sehr niedrige Starttemperatur von nur 120-140°C, wohingegen OBSH eine Starttemperatur von 140-160°C und ADCA aktiviert mit Zinksalzen eine Starttemperatur von 160-170°C und nicht aktiviert von 210-220°C hat.

Die chemischen, thermisch aktivierbaren Treibmittel sind erfindungsgemäß vorzugsweise in einer Menge von 0,1 bis 20 Gew.-%, insbesondere von 0,2 bis 15 Gew.-%, noch bevorzugter 0,5 bis 10,0 Gew.-%, jeweils bezogen auf die gesamte Anwendungszubereitung enthalten. Besonders bevorzugt ist als das mindestens eine Treibmittel ein Sulfonsäurehydrazid, insbesondere OBSH, und/oder Azodicarbonamid enthalten, vorzugsweise in einer Menge von 0,1 bis 10 Gew.-%, bevorzugt von 0,2 bis 5 Gew.-%, besonders bevorzugt von 0,5 bis 3,5 Gew.-%, jeweils bezogen auf das Gesamtgewicht der Zubereitung.

Die erfindungsgemäßen "chemischen Treibmittel" können vorteilhafter Weise in Kombination mit Aktivatoren und/oder Beschleunigern, wie beispielsweise Zinkverbindungen (beispielsweise Zinkoxid, Zinkstearat, Zink-di-toluolsulfinat, Zink-di-benzolsulfinat), Magnesiumoxid, Calciumoxid und/oder (modifizierten) Harnstoffen zum Einsatz kommen. Die Zinkverbindungen sind erfindungsgemäß besonders bevorzugt.

Dabei spielt es erfindungsgemäß keine wesentliche Rolle, ob die Treibmittel bereits in aktivierter Form eingesetzt werden oder, ob die thermisch expandierbaren Zubereitungen zusätzlich zu dem Treibmittel einen entsprechenden Aktivator und/oder Beschleuniger, wie beispielsweise Zink-di-toluolsulfinat enthalten.

Es hat sich als besonders vorteilhaft erwiesen, wenn die erfindungsgemäßen thermisch expandierbaren Zubereitungen die Aktivatoren und/oder Beschleuniger, insbesondere die Zinkverbindungen, in einer Menge von 0,05 bis 2 Gew.-%, insbesondere von 0,1 bis 1 Gew.-%, bezogen auf die Gesamtmasse der thermisch expandierbaren Zubereitung enthalten.

Als physikalische Treibmittel werden vorzugsweise expandierbare Kunststoffmikrohohlkugeln auf der Basis von Polyvinylidenchlorid¬copolymeren oder Acrylnitril/(Meth)acrylat-Copolymeren eingesetzt. Diese sind beispielsweise unter den Namen "Dualite®" beziehungsweise "Expancel®" von den Firmen Pierce & Stevens beziehungsweise Akzo Nobel im Handel erhältlich.

Es kann erfindungsgemäß bevorzugt sein, in den thermisch expandierbaren Zubereitungen eine Kombination aus mindestens einem chemischen, thermisch aktivierbaren Treibmittel und mindestens einem physikalischen, thermisch aktivierbaren Treibmittel einzusetzen.

Die Menge an Treibmittel wählt man vorzugsweise so, dass sich das Volumen der thermisch expandierbaren Masse beim Erwärmen auf Aktivierungstemperatur (oder Expansionstemperatur) um mindestens 10 %, vorzugsweise mindestens 50 % und insbesondere mindestens 100 % irreversibel vergrößert. Hierunter ist zu verstehen, dass die Masse zusätzlich zur normalen und reversiblen thermischen Ausdehnung gemäß ihrem thermischen Ausdehnungskoeffizienten ihr Volumen im Vergleich zum Ausgangsvolumen bei Raumtemperatur (20 °C) beim Erwärmen auf die Aktivierungstemperatur irreversibel derart vergrößert, dass es nach dem Wiederabkühlen auf Raumtemperatur um mindestens 10 %, vorzugsweise um mindestens 50 % und insbesondere mindestens 100 % größer ist als zuvor. Der angegebene Expansionsgrad bezieht sich also auf das Volumen der Masse bei Raumtemperatur vor und nach dem vorübergehenden Erhitzen auf die Aktivierungstemperatur. Die Obergrenze des Expansionsgrads, also der irreversiblen Volumenvergrößerung, kann man durch die Wahl der Menge des Treibmittels einstellen. Bevorzugte Obergrenzen liegen im Bereich von bis 1000 %, vorzugsweise bis 750 %. Bevorzugte Bereiche sind 250 bis 750 %.

Die Aktivierungstemperatur liegt vorzugsweise im Bereich von 120 bis 220 °C. Diese Temperatur soll vorzugsweise für eine Zeitdauer im Bereich von 10 bis 150 Minuten aufrecht gehalten werden.

Die thermisch expandierbare Zubereitung enthält zudem ein Härter-System enthaltend mindestens ein Peroxid und mindestens ein Chinon, Chinondioxim oder Dinitrosobenzol. Besonders die Kombination von einem Peroxid-Härter und einem Härter basierend auf Chinonen, Chinondioximen oder Dinitrosobenzol führt zu hervorragenden Expansionseigenschaften bei gleichzeitig guter Haftung und Elastizität des resultierenden Schaumes. Durch diese Kombination wird ein gutes Gleichgewicht hergestellt, wobei die Zubereitung nicht zu schnell aushärtet. Bei zu schnellem Aushärten könnte sonst die Oberfläche bei der Expansion reißen und durch entweichendes Gas der Schaum zusammenfallen. Vorzugsweise ist das Härter-System in einer Menge von 0,1 bis 10 Gew.-%, bevorzugt von 0,5 bis 5 Gew.-%, besonders bevorzugt von 1 bis 3 Gew.-% enthalten, jeweils bezogen auf das Gesamtgewicht der Zubereitung.

Erfindungsgemäß sind insbesondere die organischen Peroxide, wie beispielsweise Ketonperoxide, Diacylperoxide, Perester, Perketale und Hydroperoxide bevorzugt. Besonders bevorzugt sind beispielsweise Cumenhydroperoxid, t-Butylperoxid, Bis(tert-butylperoxy)-diisopropylbenzol, Di(tert-butylperoxyisopropyl)benzol, Dicumylperoxid, t-Butylperoxybenzoat, Di-alkylperoxydicarbonat, Diperoxyketale (z.B. 1,1-Di-tert-butylperoxy-3,3,5-trimethylcyclohexan), Ketonperoxide (z.B. Methylethylketon-Peroxide), 4,4- Di-tert-butylperoxy-n-butyl-valerate und Trioxepane (z.B. 3,3,5,7,7-Pentamethyl-1,2,4-trioxepan).

Besonders bevorzugt sind erfindungsgemäß die, beispielsweise kommerziell von der Firma Akzo Nobel bzw. Pergan vertriebenen, Peroxide, wie 3,3,5,7,7-Pentamethyl-1,2,4-trioxepan, 2,5-Dimethyl-2,5-di(tert-butylperoxy)hexan, Di-tert-butylperoxid, 2,5-Dimethyl-2,5-di(tert-butylperoxy)hexan, tert-Butylcumylperoxid, Di(tert-butylperoxyisopropyl)benzol, Dicumylperoxid, Butyl-4,4-di(tert-butylperoxi)valerat, tert-Butylperoxy-2-ethylhexylcarbonat, 1,1-Di-(tert-butylperoxy)-3,3,5-trimethylcyclohexan, tert-Butylperoxybenzoat, Di-(4-methylbenzoyl)peroxid und Dibenzoylperoxid. Es kann erfindungsgemäß besonders bevorzugt sein, Di(tert-butylperoxyisopropyl)benzol, Di(tert-butylperoxy)-3,3,5-trimethylcyclohexan und/oder Dicumylperoxid als Peroxid einzusetzen.

Es hat sich weiterhin als erfindungsgemäß vorteilhaft erwiesen, wenn die eingesetzten Peroxide bei Raumtemperatur im Wesentlichen inert sind und erst bei Erhitzung auf höhere Temperaturen aktiviert werden (beispielsweise bei Erhitzung auf Temperaturen zwischen 130°C und 240°C). Besonders vorteilhaft ist es erfindungsgemäß, wenn das eingesetzte Peroxid bei 65°C eine Halbwertszeit von mehr als 60 Minuten aufweist, das heißt, dass nach einer Erhitzung der thermisch expandierbaren Zubereitung enthaltend das Peroxid auf 65°C für 60Minuten sich weniger als die Hälfte des eingesetzten Peroxids zersetzt hat. Erfindungsgemäß können solche Peroxide besonders bevorzugt sein, die bei 115°C eine Halbwertszeit von 60 Minuten aufweisen.

Ferner können auch mehrere Peroxide in Kombination, insbesondere die oben als bevorzugt genannten in Kombination eingesetzt werden.

Ferner kann es vorteilhaft, wenn das mindestens eine oder die Peroxide in einer auf einen festen inerten Träger, wie beispielsweise Calciumcarbonat und/oder Silica und/oder Kaolin aufgebrachten Form eingesetzt werden.

Vorzugsweise ist das Peroxide in einer Menge von 0,1 bis 3 Gew.-%, bevorzugt von 0,5 bis 2 Gew.-% enthalten, jeweils bezogen auf das Gesamtgewicht der Zubereitung.

Weiterhin enthält das Härter-System mindestens ein Chinonen, Chinondioximen oder Dinitrosobenzol, insbesondere 1,4-Benzochinondioxim, Nitrosobenzol oder Dinitrosobenzol, insbesondere 1,4-Benzochinondioxim.

Vorzugsweise ist das Chinon, Chinondioxim oder Dinitrosobenzol, insbesondere 1,4-Benzochinondioxim in einer Menge von 0,1 bis 3 Gew.-%, bevorzugt von 0,5 bis 2 Gew.-% enthalten, jeweils bezogen auf das Gesamtgewicht der Zubereitung.

Zusätzlich kann das Härter-System aber auch weitere Härter für Kautschuk basierte Systeme enthalten, wie zum Beispiel Schwefel basierte Härter. Allerdings ist es ein großer Vorteil der vorliegenden Erfindung, dass die thermisch expandierbaren Zubereitungen auch ohne weitere Härter für Kautschuk basierte Systeme auskommt, insbesondere ohne Schwefel basierte Härter. In einer bevorzugten Ausführungsform ist die thermisch expandierbaren Zubereitung im Wesentlichen frei von elementaren Schwefel. "Im Wesentlichen frei von", wie in diesem Zusammenhang verwendet, bedeutet, dass die Menge des entsprechenden Stoffs in der Zubereitung weniger als 0,05 Gew.-%, vorzugsweise weniger als 0,01 Gew.-%, noch bevorzugter weniger als 0,001 Gew.-%, bezogen auf das Gesamtgewicht der Zubereitung beträgt, insbesondere gänzlich frei ist.

In einer bevorzugten Ausführungsform enthält die thermisch expandierbare Zubereitung zudem mindestens einen Haftvermittler, der vorzugsweise ausgewählt wird aus Epoxiden, Anhydrid gepfropften Polybutadien und/oder Isocyanaten. Vorzugsweise ist der Haftvermittler in einer Menge von 1 bis 15 Gew.-%, bevorzugt von 2 bis 10 Gew.-% enthalten, jeweils bezogen auf das Gesamtgewicht der Zubereitung.

Geeignete Epoxide sind alle gängigen Epoxidharze. Als Epoxidharze eignen sich eine Vielzahl von Epoxiden, insbesondere Polyepoxide, die mindestens 2 1,2- Epoxygruppen pro Molekül haben. Das Epoxid-Äquivalent dieser Polyepoxide kann zwischen 150 und 50000, vorzugsweise zwischen 170 und 5000, variieren. Die Polyepoxide können grundsätzlich gesättigte, ungesättigte, cyclische oder acyclische, aliphatische, alicyclische, aromatische oder heterocyclische Polyepoxidverbindungen sein. Beispiele für geeignete Polyepoxide schliesen die Polyglycidylether ein, die durch Reaktion von Epichlorhydrin oder Epibromhydrin mit einem Polyphenol in Gegenwart von Alkali hergestellt werden. Hierfür geeignete Polyphenole sind beispielsweise Resorcin, Brenzkatechin, Hydrochinon, Bisphenol A (Bis-(4-Hydroxyphenyl)-2,2-propan)), Bisphenol F (Bis(4-hydroxyphenyl)methan), Bis(4-hydroxyphenyl)-1,1-isobutan, 4,4'-Dihydroxybenzophenon, Bis(4-hydroxyphenyl)-1,1-ethan, 1,5-Hydroxynaphthalin. Weitere geeignete Polyphenole als Basis für die Polyglycidylether sind die bekannten Kondensationsprodukte aus Phenol und Formaldehyd oder Acetaldehyd vom Typ der Novolakharze. Besonders bevorzugt sind aromatische Epoxidharze, insbesondere Bisphenol A basierte Epoxid Harze.

Im Falle eines Epoxids als Haftvermittler ist es vorteilhaft, wenn zudem ein thermisch aktivierbarer oder latenter Härter für das Epoxidharz-Bindemittelsystem enthalten ist. Als geeignete thermisch aktivierbare oder latente Härter können Guanidine, substituierte Guanidine, substituierte Harnstoffe, Melaminharze, Guanamin-Derivate, cyclische tertiäre Amine, aromatische Amine und/oder deren Mischungen eingesetzt werden. Dabei können die Härter stöchiometrisch mit in die Härtungsreaktion einbezogen sein. Sie können jedoch auch katalytisch wirksam sein. Beispiele für substituierte Guanidine sind Methylguanidin, Dimethylguanidin, Trimethylguanidin, Tetramethylguanidin, Methylisobiguanidin, Dimethylisobiguanidin, Tetramethylisobiguanidin, Hexamethylisobiguanidin, Hepamethylisobiguanidin und ganz besonders Cyanoguanidin (Dicyandiamid). Als Vertreter für geeignete Guanamin-Derivate seien alkylierte Benzoguanamin-Harze, Benzoguanamin-Harze oder Methoximethyl-ethoxymethylbenzoguanamin genannt.

Im Falle Anhydrid gepfropften Polybutadien als Haftvermittler sind insbesondere Maleinsäure Anhydrid gepfropfte Polybutadiene bevorzugt. Diese Polymere enthalten dann Bersteinsäureanhydrid-Gruppen.

Geeignete Isocyante schließen die bekannten Isocyante, insbesondere Polyisocyante ein. Als Polyisocyanate in der Polyisocyanatkomponente sind Isocyanate mit zwei oder mehr Isocyanatgruppen geeignet. Vorzugsweise enthalten die Polyisocyanate 2 bis 10, vorzugsweise 2 bis 5, bevorzugt 2 bis 4, insbesondere 2 Isocyanatgruppen pro Molekül. Die Verwendung von Isocyanaten mit einer Funktionalität von mehr als zwei, kann unter Umständen vorteilhaft sein, da derartige Polyisocyanate als Vernetzer geeignet sind. Besonders bevorzugt sind daher Gemische von Verbindungen mit 2 oder mehr Isocyanatgruppen, wie beispielsweise Oligomerenmischungen.

Beispiele für geeignete Polyisocyanate sind 1,5-Naphthylendiisocyanat, 2,4'-, 2,2'- oder 4,4'-Diphenylmethan¬diisocyanat (MDI), hydriertes MDI (H12MDI), Allophanate des MDI, Xylylendiisocyanat (XDI), m- und p-Tetramethylxylylen¬diisocyanat (TMXDI), 4,4'-Diphenyldimethylmethandiisocyanat, Di- und Tetraalkyldiphenylmethandiisocyanat, 4,4'-Dibenzyldiisocyanat, 1,3-Phenylendiisocyanat, 1,4-Phenylendiisocyanat, die Isomeren des Toluylendiisocyanats (TDI), 1-Methyl-2,4-diisocyanato-cyclohexan, 1,6-Diisocyanato-2,2,4-trimethylhexan, 1,6-Diisocyanato-2,4,4-trimethylhexan, 1-Isocyanatomethyl-3-isocyanato-1,5,5-trimethylcyclohexan (IPDI), chlorierte und bromierte Diisocyanate, phosphorhaltige Diisocyanate, 4,4'-Di-isocyanatophenylperfluorethan, Tetramethoxybutan-1,4-diisocyanat, Butan-1,4-diisocyanat, Hexan-1,6-diisocyanat (HDI), Dicyclohexylmethandiisocyanat, Cyclohexan-1,4-diisocyanat, Ethylen-diisocyanat, Phthalsäure-bis-isocyanato-ethylester, Trimethylhexamethylendiisocyanat, 1,4-Diisocyanatobutan, 1,12-Diisocyanatododecan und Dimerfettsäurediisocyanat, sowie aliphatische Isocyanate wie Hexamethylendiisocynat, Undecandiisocyanat, Dodecamethylendiisocyanat, 2,2,4-Trimethylhexan-2,3,3-Trimethyl-hexamethylen, 1,3- oder 1,4-Cyclohexandiisocyanat, 1,3- oder 1,4-Tetramethylxyloldiisocyanat, Isophorondiisocyanat, 4,4-Dicyclohexylmethandiisocyanat oder Lysinesterdiisocyanat. Als Polyisocyanat wird vorzugsweise ein aromatisches Polyisocyanat als Haftvermittler eingesetzt. In einem aromatischen Polyisocyanat sind die NCO-Gruppen an aromatischen Kohlenstoffatomen gebunden.

In einer bevorzugten Ausführungsform enthält die thermisch expandierbare Zubereitung weiterhin mindestens ein peroxidisch vernetzbares Polymer ausgewählt aus binären Copolymeren, enthaltend mindestens eine Monomereinheit ausgewählt aus Vinylacetat, (Meth)acrylsäuren, Styrol und deren Derivaten, und Terpolymeren auf Basis mindestens eines ersten Monomers, ausgewählt aus den einfach oder mehrfach ungesättigten Kohlenwasserstoffen, insbesondere Ethylen, und mindestens eines zweiten Monomers, ausgewählt aus den (Meth)acrylsäuren und deren Derivaten, insbesondere (Meth)acrylsäureestern, und mindestens eines dritten Monomers, ausgewählt aus epoxy-funktionalisierten (Meth)acrylaten, insbesondere Glycidyl(meth)acrylat, sowie Kombinationen davon. Diese peroxidisch vernetzbare Polymer ist zusätzlich zu den enthaltenden Kautschuken enthalten und stellt eine weitere Komponente dar. Als "peroxidisch vernetzbar" bezeichnet der Fachmann derartige Polymere, bei denen durch Einwirkung eines radikalischen Starters ein Wasserstoffatom aus der Haupt- oder einer Nebenkette abstrahiert werden kann, so dass ein Radikal zurückbleibt, das in einem zweiten Reaktionsschritt andere Polymerketten angreift.

Unter "binären Copolymeren" werden erfindungsgemäß alle Copolymere verstanden, die aus einer Polymerisationsreaktion aus zwei voneinander verschiedenen Monomeren hervorgehen. Selbstverständlich sollen hierbei erfindungsgemäß auch solche Copolymere umfasst sein, in deren Polymerkette weitere Monomere, beispielsweise durch Abbaureaktionen oder Verunreinigungen, in derart geringen Mengen eingebaut sind, so dass diese die Eigenschaften des binären Copolymeren nicht beeinflussen. Das peroxidisch vernetzbare binäre Copolymer enthält mindestens eine Monomereinheit ausgewählt aus Vinylacetat, (Meth)acrylsäuren, Styrol und deren Derivaten. Dabei bedeutet wie üblich der Vorsatz "(Meth)" vor "Acrylat", dass es sich bei diesen Monomeren sowohl um Acrylsäuren und/oder deren Derivate als auch um Methacrylsäuren und/oder deren Derivate handeln kann. Derivate der (Meth)acrylsäuren sind insbesondere (Meth)acrylsäureester, bevorzugt ist die Alkoholkomponente des Esters vorzugsweise ausgewählt aus solchen, die 1 bis 8 C-Atome enthalten. Besonders bevorzugte Monomereinheiten dieser Gruppe sind Vinylacetat, Butylacrylat, Methylacrylat, Ethylacrylat und 2-Ethylhexylacrylat. Vinylacetat ist erfindungsgemäß ein besonders bevorzugter Vertreter dieser Gruppe.

Das zweite Monomer des binären Copolymers ist vorzugsweise ausgewählt aus den Alkenen. Ethylen ist ein besonders bevorzugtes zweites Monomer des binären Copolymers im Sinne der vorliegenden Erfindung.

In einer ersten bevorzugten Ausführungsform ist das mindestens eine peroxidisch vernetzbare Polymer ausgewählt aus Ethylen-Vinylacetat-Copolymeren, funktionalisierten Ethylen-Vinylacetat-Copolymeren, funktionalisierten Ethylen-Butylacrylat-Copolymeren, Ethylen-Methylacrylat-Copolymeren, Ethylen-Ethylacrylat-Copolymeren, Ethylen-Butylacrylat-Copolymere, funktionalisierten Ethylen-Butylacrylat-Copolymeren, Ethylen-(Meth)acrylsäure-Copolymeren und Ethylen-2-Ethylhexylacrylat-Copolymeren. In besonders bevorzugten Ausführungsform ist das mindestens eine peroxidisch vernetzbare binäre Copolymer ausgewählt aus Ethylen-Vinylacetat-Copolymeren, funktionalisierten Ethylen-Vinylacetat-Copolymeren, Ethylen-Butylacrylat-Copolymeren, funktionalisierten Ethylen-Butylacrylat-Copolymeren, Ethylen-Methylacrylat-Copolymeren, Ethylen-Ethylacrylat-Copolymeren, Ethylen-(Meth)acrylsäure-Copolymeren und Ethylen-2-Ethylhexylacrylat-Copolymeren.

Unter einem "funktionalisierten Copolymeren" wird dabei erfindungsgemäß ein Copolymer verstanden, das mit zusätzlichen Hydroxidgruppen, Carboxygruppen, Anhydridgruppen, Acrylatgruppen und/oder Glycidylmethacrylat-Gruppen, vorzugsweise an den Kettenenden, versehen ist.

Besonders vorteilhaft im Sinne der vorliegenden Erfindung sind Ethylen-Vinylacetat-Copolymere, Ethylen-Butylacrylat-Copolymere sowie deren funktionalisierte Derivate. Ethylen-Vinylacetat-Copolymere, insbesondere die Vertreter, die keine Funktionalisierung aufweisen, können erfindungsgemäß ganz besonders bevorzugt sein. Ganz besonders bevorzugt sind Ethylen-Vinylacetat-Copolymere mit Vinylacetatanteil von 25-50 Gew.-% bezogen auf die Gesamtmasse des binären Copolymeren, enthalten, sind erfindungsgemäß besonders bevorzugt.

Alternativ oder zusätzlich kann als peroxidisch vernetzbares Polymer mindestens ein Terpolymer, auf Basis mindestens eines ersten Monomers, ausgewählt aus den einfach oder mehrfach ungesättigten Kohlenwasserstoffen, mindestens eines zweiten Monomers, ausgewählt aus den (Meth)acrylsäuren und deren Derivaten, und mindestens eines dritten Monomers, ausgewählt aus epoxy-funktionalisierten (Meth)acrylaten.

Es hat sich erfindungsgemäß als bevorzugt erwiesen, wenn die erste Monomereinheit des Terpolymers ein einfach oder mehrfach ungesättigter acyclischer Kohlenwasserstoff ist; Alkene und Diene sind besonders bevorzugte Vertreter dieser Gruppe; die Monomereinheiten Ethylen, Propylen, 1,2-Butadien, 1,3-Butadien und Isopren sind erfindungsgemäß ganz besonders bevorzugte Vertreter dieser Gruppe, wobei Ethylen am meisten bevorzugt ist.

Das zweite Comonomer des Terpolymers ist ausgewählt aus (Meth)acrylsäure und deren Derivaten. Dabei bedeutet wie üblich der Vorsatz "(Meth)" vor "Acrylat", dass es sich bei diesen Monomeren sowohl um Acrylsäuren und/oder Acrylsäureester als auch um Methacrylsäuren und/oder Methacrylsäure¬ester handeln kann. Sofern das erfindungsgemäße Terpolymer Acrylsäureester und/oder Methacrylsäureester enthält, ist die Alkoholkomponente des Esters vorzugsweise ausgewählt aus solchen, die 1 bis 6 C-Atome enthalten. Insbesondere können Methylester, Ethylester und Butylester eingesetzt werden.

In einer bevorzugten Ausführungsform der vorliegenden Erfindung ist das dritte Comonomer der Komponente (e) ausgewählt aus Glycidyl(meth)acrylsäureestern.

Unter Glycidyl(meth)acrylsäureestern werden erfindungsgemäß die Ester der Acrylsäure beziehungsweise Methacrylsäure mit Glycidol (2,3-Epoxypropan-1-ol) verstanden.

Besonders bevorzugt sind Terpolymere von Ethylen mit (Meth)acrylsäureestern, insbesondere Methylacrylat und Butylacrylat, und Glycidyl(meth)acrylsäureestern, insbesondere Glycidylmethacrylat. Dabei beträgt der Anteil der (Meth)acrylsäureester vorzugsweise 10 bis 30 Gew.-%, vorzugsweise 20 bis 30 Gew.-%, der Anteil an Glycidyl(meth)acrylsäureestern vorzugsweise 5 bis 20 Gew.-%, vorzugsweise 5 bis 10 Gew.-%, mit dem Rest Ethylen, jeweils bezogen auf das Gesamtgewicht des Terpolymers. Bevorzugt sind Ethylen-Butylacrylat-Glycidylmethacrylat und Ethylen-Methylacrylat-Glycidylmethacrylat Terpolymere und Mischungen davon.

Auch wenn diese Komponente erfindungsgemäß als Terpolymer definiert wird, sollen selbstverständlich auch solche Copolymere erfindungsgemäß mit umfasst sein, die noch weitere Monomere, beispielsweise aus Abbaureaktionen oder Verunreinigungen, in derart geringen Mengen enthalten, dass diese die Eigenschaften der erfindungsgemäßen Terpolymere nicht beeinflussen.

In verschiedenen Ausführungsformen zeichnen sich die peroxidisch vernetzbaren Polymere, insbesondere die binären Copolymere durch einen hohen Schmelzflussindex aus. Bevorzugt haben die peroxidisch vernetzbaren Polymere, vorzugsweise binären Copolymere, insbesondere das Ethylen/Vinylacetat-Copolymer, einen Schmelzflussindex größer/gleich 100 g/10min, vorzugsweise größer/gleich 200 g/10min, insbesondere größer/gleich 300 g/10min. Besonders bevorzugt haben die peroxidisch vernetzbaren Polymere, vorzugsweise binären Copolymere, insbesondere das Ethylen/Vinylacetat-Copolymer, einen Schmelzflussindex von 100 bis 1000 g/10min, insbesondere 200 bis 700 g/10min. Der Schmelzflussindex der peroxidisch vernetzbaren Polymere wird erfindungsgemäß in einem Schmelzflussmessgerät bestimmt, wobei das Polymer bei 190°C in einem beheizbaren Zylinder aufgeschmolzen und unter einem durch die Auflagelast (2,16kg) entstehenden Druck durch eine definierte Standarddüse gedrückt wird (DIN EN ISO 1133). Ermittelt wird die austretende Masse als Funktion der Zeit. Die Schmelztemperatur liegt vorzugsweise im Bereich von 40 bis 93°C.

Die thermisch expandierbaren Zubereitungen enthalten vorzugsweise bis zu 10 Gew.-% mindestens eines oder mehrerer der peroxidisch vernetzbaren Polymere, vorzugsweise binären Copolymere. Thermisch expandierbare Zubereitungen, die 0,1 bis 3 Gew.-% mindestens eines oder mehrerer der peroxidisch vernetzbaren binären Copolymeren, jeweils bezogen auf die Gesamtmasse der thermisch expandierbaren Zubereitung, enthalten, insbesondere eines Ethylen/Vinylacetat-Copolymers, sind besonders bevorzugt.

Der Einsatz der erfindungsgemäßen Copolymere/Terpolymere, vorzugsweise der binären Copolymere, insbesondere eines Ethylen/Vinylacetat-Copolymers, in den erfindungsgemäßen Zubereitungen kann sich besonders vorteilhaft auf die Haftung des geschäumten Schaums auswirken. Insbesondere ein vorteilhafter Schmelzflussindex der Polymere kann die Haftung des aufblähenden Schaums in einem Hohlraum an allen Oberflächen verbessern.

Als weitere Komponente kann insbesondere ein flüssiges Polymer ausgewählt aus flüssigen Kohlenwasserstoffharzen und flüssigen Polyolefinen enthalten sein, bevorzugt in einer Menge von 5 bis 35 Gew.-%, bevorzugt von 10 bis 30 Gew.-%, jeweils bezogen auf das Gesamtgewicht der Zubereitung. Ein weiteres flüssiges Polymer kann insbesondere vorteilhaft sein, um die rheologischen Eigenschaften anzupassen bzw. weiter zu verbessern.

Als "Kohlenwasserstoffharze" werden erfindungsgemäß u.a. thermoplastische Polymere bezeichnet, die aus Erdölfraktionen gewonnen werden können. Diese können beispielsweise eine mittlere Molmasse von höchstens 2500g/mol aufweisen. Als mittlere Molmasse von Polymeren wird im Rahmen der vorliegenden Anmeldung generell die gewichtsmittlere Molmasse verstanden. Im Rahmen der vorliegenden Erfindung kann das gewichtsmittlere Molekulargewicht (Mw) mittels Gelpermeations-chromatographie (GPC) mit Polystyrol als Standard bestimmt werden, wie oben definiert.

Die Kohlenwasserstoffharze können völlig aliphatisch oder völlig aromatisch sein oder sie können aliphatische und aromatische Strukturen aufweisen. Weiterhin kann es sich um aromatisch modifizierte aliphatische Harze handeln.

Wenn enthalten sind die Kohlenwasserstoffharze in den thermisch expandierbaren Zubereitungen vorzugsweise in einer Menge von bis 35 Gew.-%, insbesondere von 5 bis 35 Gew.-%, ganz besonders bevorzugt von 10 bis 25 Gew.-%, jeweils bezogen auf die Gesamtmasse der thermisch expandierbaren Zubereitung enthalten.

Das flüssige Polymer kann ferner aus flüssigen Polyolefinen ausgewählt werden. Hierbei ist insbesondere Polyisobutylen bevorzugt, insbesondere mit einem Molekulargewicht Mw bis 3000 g/mol. Derartige Polymere sind, wenn sie in den erfindungsgemäßen Zubereitungen enthalten sind, vorzugsweise in Mengen bis 10 Gew.-%, vorzugsweise 3 bis 8 Gew.-% enthalten.

Neben den genannten Bestandteilen können die thermisch expandierbaren Massen noch weitere übliche Komponenten, wie beispielsweise Farbstoffe, Füllstoffe und Antioxidantien enthalten.

Als Füllstoffe kommen beispielsweise die diversen gemahlenen oder gefäll¬ten Kreiden, Calcium-Magnesiumcarbonate, Talkum, Graphit, Schwerspat, Kieselsäuren oder Silica sowie insbe¬sondere silikatische Füllstoffe, wie beispielsweise Glimmer, etwa in Form von Chlorit, oder silikatische Füllstoffe vom Typ des Aluminium-Magnesium-Calcium-Silicats, z. B. Wollastonit, in Frage. Talkum ist ein besonders bevorzugter Füllstoff.

Die Füllstoffe werden vorzugsweise in einer Menge von 0 bis 60 Gew.-%, insbesondere von 5 bis 18 Gew.-%, jeweils bezogen auf die Masse der gesamten thermisch expandierbaren Zubereitung eingesetzt.

Farbgebende Komponenten, insbesondere schwarze Farbstoffe auf Basis von Rußen, sind in den erfindungsgemäßen thermisch expandierbaren Zubereitungen vorzugsweise in einer Menge von 0 bis 8 Gew.-%, insbesondere von 0,1 bis 4 Gew.-%, jeweils bezogen auf die Masse der gesamten thermisch expandierbaren Zubereitung enthalten.

Als Antioxidantien oder Stabilisatoren können beispielsweise sterisch gehinderte Phenole und/oder sterisch gehinderte Thioether und/oder sterisch gehinderte aromatische Amine eingesetzt werden, wie beispielsweise Bis-(3,3-bis-(4'-hydroxy-3-tert. butylphenyl) butansäure)-glykolester.

Antioxidantien oder Stabilisatoren sind in den erfindungsgemäßen thermisch expandierbaren Zubereitungen vorzugsweise in einer Menge von 0 bis 2 Gew.-%, insbesondere von 0,1 bis 0,5 Gew.-%, jeweils bezogen auf die Masse der gesamten thermisch expandierbaren Zubereitung enthalten.

Die erfindungsgemäßen thermisch expandierbaren Zubereitungen können durch Mischung der ausgewählten Komponenten in einem beliebigen, geeigneten Mischer, wie beispielsweise einem Dispersionsmischer, einem Planetenmischen, einem Doppelschneckenmischer, einem kontinuierlichen Mischer oder einem Extruder, insbesondere einem Doppelschneckenextruder, hergestellt werden.

Obwohl es vorteilhaft sein kann, die Komponenten etwas zu erhitzen, um die Erreichung einer homogenen, einheitlichen Masse zu erleichtern, muss dafür Sorge getragen werden, dass keine Temperaturen erreicht werden, die eine Aktivierung des thermisch aktivierbaren Härters und/oder des thermisch aktivierbaren Treibmittels bewirken.

Die erfindungsgemäßen thermisch expandierbaren Zubereitungen sind vorzugsweise derart formuliert, dass sie bei 20°C fest sind.

Die Lagerung der erfindungsgemäßen Zubereitungen bis zur Anwendung erfolgt vorzugsweise in Düsenkartuschen oder Fässern, wie beispielsweise Hobbocks.

Zum Zeitpunkt der Anwendung wird die erfindungsgemäße Zubereitung mit herkömmlichen, beheizten Pumpen aus dem Lagerbehältnis zum Ort der Anwendung transportiert und dort appliziert. Ein Auftrag bis zu einer Schichtdicke von 5cm ist dabei problemlos möglich, so dass auch größere Hohlräume, beispielsweise Rohre mit einem entsprechenden Innendurchmesser, ohne weiteres gefüllt werden können.

Die Expansion der applizierten thermisch expandierbaren Zubereitung erfolgt durch Erhitzung, wobei die Zubereitung für eine bestimmte Zeit auf eine bestimmte Temperatur erhitzt wird, die ausreichend ist, um die Aktivierung des Treibmittels sowie des Härter-Systems zu bewirken.

In Abhängigkeit von der Zusammensetzung der Zubereitung und den Bedingungen der Fertigungslinie liegen derartige Temperaturen üblicherweise im Bereich von 130°C bis 240°C, vorzugsweise 150°C bis 200°C, mit einer Verweilzeit von 10 bis 90 Minuten, vorzugsweise von 15 bis 60 Minuten.

Die Art der Wärmequelle spielt prinzipiell keine Rolle, so kann die Wärmezufuhr beispielsweise durch ein Heißluftgebläse, durch Bestrahlung mit Mikrowellen, durch magnetische Induktion oder auch durch Heizzangen erfolgen. Im Bereich des Fahrzeugbaus sowie in Technologiefeldern mit verwandten Herstellprozessen ist es besonders vorteilhaft, wenn die Expansion der erfindungsgemäßen Zubereitungen während der Passage des Fahrzeugs durch den Ofen zur Aushärtung der kathodischen Tauchlackierung oder zum Einbrennen der Pulverlackbeschichtungen erfolgt, so dass auf einen separaten Erhitzungsschritt verzichtet werden kann.

Ein zweiter Gegenstand der vorliegenden Erfindung ist ein Verfahren zum Versteifen und/oder Verstärken von Bauteilen mit dünnwandigen Strukturen, insbesondere von rohrförmigen Strukturen, und/oder zum Abdichten von Hohlräumen in Bauteilen. In solchen Verfahren kann eine erfindungsgemäße pumpbare, thermisch expandierbare Zubereitung bei einer Temperatur unterhalb von 120°C auf die Oberfläche der zu verstärkenden Struktur oder in den Hohlraum des abzudichtenden Bauteils auf- oder eingebracht werden, vorzugsweise mit einem Pumpendruck von weniger als 200bar, und diese Zubereitung zu einem späteren Zeitpunkt vorzugsweise bei Temperaturen oberhalb von 130°C ausgehärtet werden. Das Aushärten führt dazu, dass die thermisch expandierbare Zubereitung expandiert und so das Bauteil versteift/den Hohlraum abdichtet.

Ein Aufbringen der Zubereitungen in einem Temperaturbereich von 30°C bis 80°C ist dabei erfindungsgemäß besonders bevorzugt.

Weiterhin besonders bevorzugt ist eine Applikation bei einem Applikationsdruck von 6bar bis 180bar.

Die eigentliche Härtung findet erfindungsgemäß zu einem "späteren Zeitpunkt" statt. So ist es beispielsweise erfindungsgemäß denkbar, dass die zu versteifenden oder abzudichtenden Bauteile mit den pumpbaren, thermisch expandierbaren Zubereitungen beschichtet/gefüllt und anschließend zwischengelagert werden. Dabei kann die Zwischenlagerung beispielsweise auch den Transport zu einem anderen Werk umfassen. Eine derartige Zwischenlagerung kann bis zu einigen Wochen dauern.

In einer anderen Ausführungsform ist es aber auch denkbar, dass die zu versteifenden oder abzudichtenden Bauteile kurz nach der Beschichtung/Befüllung mit der pumpbaren, thermisch expandierbaren Zubereitung einem Härtungsschritt unterzogen werden. Dies kann unmittelbar oder bei einer Fließbandproduktion nach Erreichen einer der folgenden Stationen erfolgen. Es ist im Rahmen dieser Ausführungsform erfindungsgemäß besonders bevorzugt, wenn der Aushärtungsschritt innerhalb von 24h, insbesondere innerhalb von 3h, nach dem Auftrag der erfindungsgemäßen Zubereitungen erfolgt.

Die erfindungsgemäßen pumpbaren, thermisch aktivierbaren Zubereitungen, bzw. die daraus resultierenden Schäume können in allen Produkten zum Einsatz kommen, die Hohlräume oder zu verstärkende Rohrkonstruktionen aufweisen. Dies sind neben den Fahrzeugen beispielsweise Flugzeuge, Haushaltsgeräte, Möbel, Gebäude, Wände, Abtrennungen, oder Boote sowie alle Vorrichtungen, die eine tragende Rahmenkonstruktion aus Rohren aufweisen, wie beispielsweise Sportgeräte, Mobilitätshilfsmittel, Gestelle und Fahrräder.

Beispiele für Sportgeräte, bei denen die vorliegende Erfindung vorteilhaft verwendet werden kann, sind Fahrräder, Angelnetze, Angelruten, Torpfosten, Tennisnetzpfosten sowie Basketballkorbkonstruktionen.

Unter dem Begriff "Fahrrad" sind erfindungsgemäß alle zumeist zweirädrigen, einspurigen Fahrzeuge zu verstehen, die durch das Treten von Pedalen angetrieben werden.

Neben den herkömmlichen Fahrradkonstruktionen, bei denen der Fahrer eine sitzende Position einnimmt, sollen erfindungsgemäß beispielsweise auch Liegeräder mit umfasst sein. Neben den herkömmlichen festen Rahmen sind auch Konstruktionen mit Gelenken, wie beispielsweise Falträder erfindungsgemäß umfasst. Zudem sollen auch drei- oder mehrrädrige Fahrzeuge mit umfasst sein.

Die erfindungsgemäßen Zubereitungen können beispielsweise die Bestandteile eines Diamantrahmens, eines Slopingrahmens, eines Fachwerkrahmens, eines Kreuzrahmens, eines Trapezrahmens, eines Anglaiserahmens, eines Schwanenhalsrahmens, eines Waverahmens, eines Easy-boarding-Rahmens oder eines Y-Rahmen verstärken.

Weiterhin können die erfindungsgemäßen Zubereitungen eingesetzt werden, um die Rahmenkonstruktionen von Mobilitätshilfsmittel, wie beispielsweise Rollstühle, Rollatoren, Gehstützen, Krankenstöcken oder Gehböcken, zu verstärken.

Im Bereich des Fahrzeugbaus hat sich der Einsatz der erfindungsgemäßen Zubereitungen insbesondere im Bereich der Konstruktion des Fahrersicherheitskäfigs beziehungsweise der Fahrgastzelle als vorteilhaft erwiesen, da dadurch der Konstruktion eine enorme Stabilität bei gleichzeitig geringem Gewicht verliehen werden kann. Insbesondere bei der Konstruktion von Rennwagen aller Klassen (Formel I, Tourenwagen, Rallye-Fahrzeugen etc.) kann die erfindungsgemäße Zubereitung vorteilhaft eingesetzt werden.

Ein weiteres bevorzugtes Anwendungsgebiet der vorliegenden Erfindung ist der Bereich der Werkzeuge. Hinsichtlich der Art der Werkzeuge bestehen keine prinzipiellen Beschränkungen. So kann es sich beispielsweise um Handwerkergeräte, Fachwerkzeuge, Gartengeräte, wie beispielsweise Spaten oder Schubkarren, oder auch Küchengeräte handeln. Allen diesen Bauteilen ist gemeinsam, dass die erfindungsgemäße Zubereitung eine Stabilisierung der Konstruktion ermöglicht, ohne dabei das Gesamtgewicht wesentlich zu erhöhen.

Weiterhin können die erfindungsgemäßen Zubereitungen vorteilhaft zur Stabilisierung von Rahmen eingesetzt werden. Unter "Rahmen" werden erfindungsgemäß seitlichen Einfassungen, wie beispielsweise Bilderrahmen, Fensterrahmen oder auch Türrahmen verstanden.

Ein weiteres Anwendungsgebiet ist die Verstärkung von Gestellen aller Arten. Auch in diesem Anwendungsgebiet steht die hohe Stabilität der entsprechend verstärkten Konstruktionen im Vordergrund. Zu den Gestellen, bei denen die erfindungsgemäße Zubereitung eingesetzt werden kann, zählen beispielsweise Leitern jeder Art, aber auch Baustellengerüste, Gerüste für den Messebau, Konstruktionen für Konzertbühnen wie beispielsweise als Traversen eingesetzte Trage- und Aufbaukonstruktionen sowie Lichtmasten für Stadien oder Zuschauertribünen.

Ein weiteres umfassendes Anwendungsgebiet ist der Bereich der Straßenausstattung. In diesen Bereich fallen neben Ampel- und Lichtanlagen auch alle weiteren Konstruktionen, wie beispielsweise Wartehäuser, Bahnsteiggeländer, Sitzkonstruktionen, Straßenschilder, Fahrradständer oder auch Leitplanken.

Bezüglich der weiteren Details dieses Gegenstandes der vorliegenden Erfindung gilt mutatis mutandis das zu dem ersten Gegenstand bereits Gesagte.

Ein dritter Gegenstand der vorliegenden Erfindung ist die Verwendung von einer erfindungsgemäßen pumpbaren, thermisch expandierbaren Zubereitung zur Versteifung und/oder Verstärkung von Bauteilen mit dünnwandigen Strukturen, insbesondere von rohrförmigen Strukturen sowie die Verwendung einer erfindungsgemäßen pumpbaren, thermisch expandierbaren Zubereitung zur (akustischen) Abdichtung von Hohlräumen in Bauteilen und/oder zur Abdichtung von Hohlräumen in Bauteilen gegen Wasser und/oder Feuchtigkeit.

Bezüglich der Details dieses Gegenstandes der vorliegenden Erfindung gilt mutatis mutandis das zu den anderen Gegenständen bereits Gesagte.

Ein vierter Gegenstand der vorliegenden Erfindung ist ein Bauteil, optional mit dünnwandiger Struktur, das mit einer erfindungsgemäßen Zubereitung durch Aushärtung, versteift und/oder verstärkt und/oder abgedichtet wurde.

Alle im Zusammenhang mit den Zubereitungen der Erfindungen offenbarten Ausführungsformen sind ebenso auf die Verfahren und Verwendungen übertragbar und umgekehrt.

Die nachfolgenden Beispiele sollen die Erfindung näher erläutern, wobei die Auswahl der Beispiele keine Beschränkung des Umfanges des Erfindungsgegenstandes darstellen soll.

Beispiele:

Es wurden die folgenden thermisch expandierbaren Zubereitungen hergestellt. Die Mengenangaben verstehen sich, sofern nichts anderes vermerkt ist, in Gewichtsprozent.

| Komponente | Beispiel 1 | Beispiel 2 | Beispiel 3 | Beispiel 4 |
|---|---|---|---|---|
| Festes Styrol-Butadien-Copolymer | 5,73 | 9,12 | 20 | 15 |
| Amorpher Russ | 3,88 | 1,82 | 2 | 2 |
| Calciumdioxid | 2,82 | 2,46 | 2,7 | 2,7 |
| Beschichtetes Calciumcarbonat | 15,53 | 13,59 | 13,11 | 14,24 |
| Ethylen-Vinyl-Acetate Copolymer | | 1,82 | 2 | 2 |
| Calciumcarbonat | 27,21 | 22,0 | | |
| Benzoquinondioxim | 0,87 | 0,77 | 0,84 | 3,36 |
| Benzolsulfinsäure-Zinksalz | 0,19 | 0,17 | 0,19 | 0,19 |
| Azodicarbonamid | 1,84 | 6,16 | 13 | 16 |
| expandierbare Mikrohohlkugeln | 2,43 | | | |
| Dicumylperoxid | | 0,76 | 0,83 | 0,83 |
| Bis(tert-butylperoxiisopropyl)benzol | 2,17 | | | |
| Dicyandiamid | | 0,46 | 0,5 | 0,5 |
| Epoxid-Harz | | 3,65 | 4,0 | 4 |
| Maleinsäureanhydrid gepf. Polybutadien | 6.31 | | | |
| Diisononylphthalat | 3,88 | 3,4 | 3,73 | 3,73 |
| Flüssiges Butadien-Isopren-Copolymer | 12,14 | 10,62 | 11,65 | |
| Flüssiges Styrol-Butadien Copolymer | | | | 10 |
| Aromatisches Kohlenwasserstoffharz in Öl | 14,99 | 23,2 | 25,45 | 25,45 |
| | | | | |
| Expansionsrate in % | | | | |
| 25min, 160 °C | 440 | 400 % | 700 % | 900 % |
| 25min, 180 °C | 470 | 500 % | 1000 % | 1000 % |
| 40min, 200 °C | 480 | 400 % | 700 % | 800 % |
| Auswaschbeständigkeit | 2 | 2 | 2 | 2 |

Spezifizierung verwendeter Komponenten:

| | |
|---|---|
| Festes Styrol-Butadien-Copolymer | SBR mit Mw > 300.000 sowohl unvernetzt als auch vorvernetzt |
| Flüssiges Styrol-Butadien-Copolymer | SBR mit Mw < 20.000 |
| Ethylen-Vinyl-Acetate Copolymer | 28% Vinylacetat Gehalt, MFR (190°C/2.16kg) 400g/10min Schmelzpunkt 60°C |
| Flüssiges Butadien-Isopren-Copolymer | Flüssig; Mw 48.000, Dichte 0,88 g/cm$^3$ |
| Aromatisches Kohlenwasserstoffharz in Öl | Flüssig; Schmelzpunkt 15°C |
| Benzoquinondioxim | 1,4-para-benzoquinondioxim in 65 % Paste |
| Epoxid-Harz | < 700 Mw; Epoxidgruppen-Gehalt 5200 - 5500 mmol/kg |

Zur Herstellung der erfindungsgemäßen thermisch expandierbaren Zubereitungen wurden die enthaltenen Polymere und Harze bei RT im Kneter bzw. wenn notwendig unter Erwärmung auf bis zu 90 °C schrittweise mit Füllstoffen zu einem homogenen Teig verarbeitet. Nacheinander wurden dann die weiteren nicht reaktiven Komponenten wie Füllstoffe, Russ, Stabilisatoren und Weichmacher, falls vorhanden, zugegeben und weitergeknetet bis die Formulierung glatt ist.

Bei unter 60 °C wurden dann alle reaktiven Komponenten wie z.B. Benzochinondioxim, Peroxide, Aktivatoren und Katalysatoren, Calciumoxid und Treibmittel zugegeben und langsam untergeknetet bis der Klebstoff homogen gemischt ist. Zuletzt wurden die Mischungen für weitere 10min bei einem Vakuum von kleiner 100mbar homogenisiert und in Kartuschen abgefüllt.

Alle Zubereitungen zeigen ein gleichmäßiges Aufblähen, wobei ein gleichmäßiger feinporiger Schaum entsteht. Der Schaum zeigt keinen Schrumpf oder Oberflächenrisse. Auch durch eine Lagerung der Zubereitung in der Feuchtekammer (30 °C/ 85 % relative Feuchte / 8 Tage) zeigen die Materialen keine Veränderungen der Eigenschaften und das Material pilzt auch nicht auf. Die Haftung des Schaumes ist auf den Stahl-Substraten CRS, ELO; HDG, ZnMg sehr gut und weist zu 100% einen Kohäsionsbruch auf. Auch die Wasseraufnahme (nach 24 h in Wasser) der Schäume weist eine hervorragende geringe Gewichtszunahme von < 5 Gew.-% bei einer Direktmessung und < 0,5 Gew.-% nach Rücktrocknung (24h) auf, wobei die Schäume der Beispiele 2 bis 4 besonders gute Werte zeigen.

Bestimmung der Expansion:

Zur Bestimmung der Expansion wurden aus den hergestellten Kartuschen der Beispielformulierungen Prüfkörper mit den Dimensionen ca. 20mm x 8-10mmø Rundraupenabschnitte bei ca. 40 - 60 °C ausgepresst und diese in einen Umluftofen eingeführt, der auf die in den Tabellen genannten Temperaturen erhitzt (Aufheizzeit ca. 7 bis 10 min) war. Die Prüfkörper wurden dann für den in den Tabellen genannten Zeitraum bei dieser Temperatur belassen (Aufheizzeit inklusive). Die Expansion bei 180°C entspricht dabei den idealen Bedingungen, die im Rahmen der Aushärtung im Fahrzeugbau erzielt werden. Die Expansion bei 160°C simuliert die Unterbrandbedingungen, die Expansion bei 200°C die Überbrandbedingungen.

Das Ausmaß der Expansion [%] wurde mittels der Wasserverdrängungsmethode nach der Formel Expansion

$$Expansion = \frac{(m2 - m1)}{m1} \times 100$$

m1 = Masse des Prüfkörpers im Originalzustand in deionisiertem Wasser
m2 = Masse des Prüfkörpers nach Einbrand in deionisiertem Wasser ermittelt.

Bestimmung der Auswaschbeständigkeit:

Zur Bestimmung der Auswaschbeständigkeit wurden Rundraupen der Geometrie 150 mm x 10mmø mit 40-60 °C auf ein vorbereitetes Blech mit ca. 200mm x 30 mm aufgetragen und für mindestens 1 h abgekühlt. Das so vorbereitet Blech wird in eine Halterung eines Stabrührwerks mit 12 cm Radius eingespannt und in ein Bad mit 55 °C getaucht, das Stabrührwerk auf eine Umdrehungsgeschwindigkeit von 60 min-1 eingestellt und gestartet. Nach 10 min wird das Rührwerk abgestellt und die Probenhalterung aus dem Wasser gehoben. Die Proben werden aus der Halterung entfernt und beurteilt. Es sind mindestens 3 Probekörper anzufertigen.

Die Auswertung erfolgt nach folgender Bewertungsskala:

0 = unverändert gegenüber dem ausgangszustand
1 = geringe Deformation
2 = deutliche Deformation ohne Materialauswaschung
3 = starke Deformation, jedoch ohne Materialauswaschung
4 = sehr starke Deformation mit Materialauswaschung
5 = Materialabtrag, jedoch ist die ursprünglich benetzte Fläche noch mit Material bedeckt
6 = bis auf geringe Restmengen fast vollständiger Materialabtrag

**Patentansprüche**

1.  Thermisch expandierbare Zubereitung, die bei Applikationstemperaturen im Bereich von 30 bis 120°C pumpbar ist, enthaltend

    (a) mindestens einen festen Kautschuk;
    (b) mindestens einen flüssigen Kautschuk;
    (c) mindestens ein thermisch aktivierbares Treibmittel; und
    (d) ein Härter-System enthaltend

- mindestens ein Peroxid und
- mindestens ein Chinon, Chinondioxim oder Dinitrosobenzol.

2. Thermisch expandierbare Zubereitung nach Anspruch 1, **dadurch gekennzeichnet, dass** der mindestens eine festen Kautschuk ausgewählt ist aus Styrol-Butadien-Kautschuken und Styrol-Isopren-Kautschuken und oder in einer Menge von 1 bis 30 Gew.-%, bevorzugt von 5 bis 25 Gew.-%, besonders bevorzugt von 8 bis 20 Gew.-% enthalten ist, jeweils bezogen auf das Gesamtgewicht der Zubereitung.

3. Thermisch expandierbare Zubereitung nach Anspruch 1 oder 2, **dadurch gekennzeichnet, dass** der mindestens eine flüssige Kautschuk ausgewählt ist aus Butadien-Isopren-Blockcopolymeren und/oder in einer Menge von 1 bis 30 Gew.-%, bevorzugt von 5 bis 25 Gew.-%, besonders bevorzugt von 8 bis 20 Gew.-% enthalten ist, jeweils bezogen auf das Gesamtgewicht der Zubereitung.

4. Thermisch expandierbare Zubereitung nach einem der Ansprüche 1 bis 3, **dadurch gekennzeichnet, dass** als das mindestens eine Treibmittel ein Sulfonsäurehydrazid und/oder Azodicarbonamid enthalten ist, vorzugsweise in einer Menge von 0,1 bis 10 Gew.-%, bevorzugt von 0,2 bis 5 Gew.-%, besonders bevorzugt von 0,5 bis 3,5 Gew.-%, jeweils bezogen auf das Gesamtgewicht der Zubereitung.

5. Thermisch expandierbare Zubereitung nach einem der Ansprüche 1 bis 4, **dadurch gekennzeichnet, dass** das Härter-System in einer Menge von 0,1 bis 10 Gew.-%, bevorzugt von 0,5 bis 5 Gew.-%, besonders bevorzugt von 1 bis 3 Gew.-% enthalten ist, jeweils bezogen auf das Gesamtgewicht der Zubereitung.

6. Thermisch expandierbare Zubereitung nach einem der Ansprüche 1 bis 5, **dadurch gekennzeichnet, dass** weiterhin mindestens einen Haftvermittler enthalten ist, vorzugsweise ausgewählt aus Epoxiden, Anhydrid gepfropften Polybutadien und/oder Isocyanaten, vorzugsweise in einer Menge von 1 bis 15 Gew.-%, bevorzugt von 2 bis 10 Gew.-%, jeweils bezogen auf das Gesamtgewicht der Zubereitung.

7. Thermisch expandierbare Zubereitung nach einem der Ansprüche 1 bis 6, **dadurch gekennzeichnet, dass** weiterhin mindestens ein peroxidisch vernetzbares Polymer ausgewählt aus

- binären Copolymeren, enthaltend mindestens eine Monomereinheit ausgewählt aus Vinylacetat, (Meth)acrylsäuren, Styrol und deren Derivaten, und
- Terpolymeren auf Basis mindestens eines ersten Monomers, ausgewählt aus den einfach oder mehrfach ungesättigten Kohlenwasserstoffen, insbesondere Ethylen, und mindestens eines zweiten Monomers, ausgewählt aus den (Meth)acrylsäuren und deren Derivaten, insbesondere (Meth)acrylsäureestern, und mindestens eines dritten Monomers, ausgewählt aus epoxy-funktionalisierten (Meth)acrylaten, insbesondere Glycidyl(meth)acrylat, sowie
- Kombinationen davon.

8. Thermisch expandierbare Zubereitung gemäß Anspruch 7, **dadurch gekennzeichnet, dass** als mindestens ein peroxidisch vernetzbares Polymer ein Ethylen/Vinylacetat-Copolymer enthalten ist, vorzugsweise mit einem Schmelzflussindex von größer/gleich 200 g/min.

9. Thermisch expandierbare Zubereitung nach einem der Ansprüche 1 bis 8, **dadurch gekennzeichnet, dass** weiterhin mindestens ein flüssiges Polymer ausgewählt aus

- flüssigen Kohlenwasserstoffharzen, und
- flüssigen Polyolefinen

enthalten ist, vorzugsweise in einer Menge von 5 bis 35 Gew.-%, bevorzugt von 10 bis 30 Gew.-%, jeweils bezogen auf das Gesamtgewicht der Zubereitung.

10. Thermisch expandierbare Zubereitung nach einem der Ansprüche 1 bis 9, **dadurch gekennzeichnet, dass** sie weiterhin Füllstoffe, Antioxidantien, Aktivatoren und/oder Farbstoffe enthält.

11. Verfahren zum Versteifen und/oder Verstärken von Bauteilen mit dünnwandigen Strukturen oder zum Abdichten von Hohlräumen in Bauteilen, insbesondere von rohrförmigen Strukturen, **dadurch gekennzeichnet, dass** eine thermisch expandierbare Zubereitung nach einem der Ansprüche 1 bis 10 bei einer Temperatur unterhalb von 120°C auf die Oberfläche der zu verstärkenden Struktur oder in den Hohlraum des abzudichtenden Bauteils auf- oder eingebracht wird, vorzugsweise mit einem Pumpendruck von weniger als 200bar, und diese Zubereitung zu einem späteren Zeitpunkt vorzugsweise bei Temperaturen oberhalb von 130°C ausgehärtet wird.

12. Verwendung einer thermisch expandierbaren Zubereitung gemäß einem der Ansprüche 1 bis 10 zur Versteifung und/oder Verstärkung von Bauteilen mit dünnwandigen Strukturen, insbesondere von rohrförmigen Strukturen, oder zur (akustischen) Abdichtung von Hohlräumen in Bauteilen und/oder zur Abdichtung von Hohlräumen in Bauteilen gegen Wasser und/oder Feuchtigkeit.

13. Bauteil, optional mit dünnwandiger Struktur, das mit einer thermisch expandierbaren Zubereitung nach einem der Ansprüche 1 bis 10 durch Aushärtung, versteift und/oder verstärkt und/oder abgedichtet wurde.

**Europäisches Patentamt**
**European Patent Office**
**Office européen des brevets**

## EUROPÄISCHER RECHERCHENBERICHT

Nummer der Anmeldung

EP 19 16 9378

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 03/053687 A1 (HENKEL TEROSON GMBH [DE]; SAUER RALF [DE] ET AL.) 3. Juli 2003 (2003-07-03) * Seite 8, Zeile 12 - Zeile 21; Ansprüche 2-9 * | 1-7,9-13 | INV. C08J9/00 C08J9/10 |
| Y | EP 3 421 527 A1 (HENKEL AG & CO KGAA [DE]) 2. Januar 2019 (2019-01-02) * Absätze [0025] - [0028], [0032], [0064], [0095], [0097] - [0099], [0107], [0116], [0121], [0144], [0154], [0159] * | 1-13 | |
| Y | WO 02/48252 A1 (HENKEL TEROSON GMBH [DE]; BORN PETER [DE] ET AL.) 20. Juni 2002 (2002-06-20) * Seite 3, Zeile 29 - Seite 4, Zeile 11 * * Seite 7, Zeile 22 - Zeile 23 * * Seite 8, Zeile 1 - Zeile 5 * * Seite 9, Zeile 8 - Zeile 18; Ansprüche 2-4,8,10,12-14 * | 1-13 | |
| | | | **RECHERCHIERTE SACHGEBIETE (IPC)** |
| Y | WO 2015/140282 A1 (HENKEL AG & CO KGAA [DE]) 24. September 2015 (2015-09-24) * Seite 2, Zeile 5 - Zeile 11 * * Seite 7, Zeile 30 - Seite 9, Zeile 24 * * Seite 10, Zeile 11 - Zeile 31 * * Seite 24 * | 1-13 | C08J |
| Y | DE 10 2015 226496 A1 (HENKEL AG & CO KGAA [DE]) 22. Juni 2017 (2017-06-22) * Absätze [0006], [0039], [0062] - [0066], [0069], [0119] - [0121]; Ansprüche 11-14 * | 1-13 | |

Der vorliegende Recherchenbericht wurde für alle Patentansprüche erstellt

| Recherchenort | Abschlußdatum der Recherche | Prüfer |
|---|---|---|
| Den Haag | 15. August 2019 | Magrizos, Simeon |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 19 16 9378

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-08-2019

| Im Recherchenbericht angeführtes Patentdokument | Datum der Veröffentlichung | Mitglied(er) der Patentfamilie | Datum der Veröffentlichung |
|---|---|---|---|
| WO 03053687 A1 | 03-07-2003 | AU 2002361059 A1<br>CA 2471350 A1<br>DE 10163252 A1<br>EP 1456024 A1<br>ES 2260505 T3<br>US 2004265560 A1<br>WO 03053687 A1 | 09-07-2003<br>03-07-2003<br>10-07-2003<br>15-09-2004<br>01-11-2006<br>30-12-2004<br>03-07-2003 |
| EP 3421527 A1 | 02-01-2019 | EP 3421527 A1<br>WO 2019002353 A1 | 02-01-2019<br>03-01-2019 |
| WO 0248252 A1 | 20-06-2002 | AU 2799902 A<br>DE 10062861 A1<br>EP 1343841 A1<br>WO 0248252 A1 | 24-06-2002<br>27-06-2002<br>17-09-2003<br>20-06-2002 |
| WO 2015140282 A1 | 24-09-2015 | CA 2943009 A1<br>CN 106133039 A<br>EP 3119836 A1<br>JP 2017510695 A<br>KR 20160135816 A<br>US 2017002164 A1<br>WO 2015140282 A1 | 24-09-2015<br>16-11-2016<br>25-01-2017<br>13-04-2017<br>28-11-2016<br>05-01-2017<br>24-09-2015 |
| DE 102015226496 A1 | 22-06-2017 | CA 3009253 A1<br>CN 108368285 A<br>DE 102015226496 A1<br>EP 3350253 A1<br>JP 2019504907 A<br>KR 20180097561 A<br>US 2018298156 A1<br>WO 2017108809 A1 | 29-06-2017<br>03-08-2018<br>22-06-2017<br>25-07-2018<br>21-02-2019<br>31-08-2018<br>18-10-2018<br>29-06-2017 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 200231077 A2
- DE 102009029030 A1